# EUROPÄISCHE PATENTSCHRIFT

(11) **EP 3 088 264 B1**
(45) Veröffentlichungstag und Bekanntmachung des Hinweises auf die Patenterteilung: **25.04.2018**
(21) Anmeldenummer: 16167346.2
(22) Anmeldetag: 27.04.2016
(51) Int. Cl.: B60T 7/20, B60W 30/18

(54) **RETARDERBREMSSYSTEM EINES FAHRZEUGGESPANNS**
RETARDER BRAKE SYSTEM OF A VEHICLE COMBINATION
SYSTEME DE RALENTISSEUR D'UN TRAIN DE VEHICULE AUTOMOBILE

(30) Priorität: 30.04.2015 DE 102015208113
(43) Veröffentlichungstag der Anmeldung: 02.11.2016
(73) Patentinhaber: Deere & Company, Moline, IL 61265 (US)
(72) Erfinder: Fritz Dr., Norbert, 68549 Ilvesheim (DE); Gugel, Rainer, 68723 Plankstadt (DE)
(74) Vertreter: Dehnhardt, Florian Christopher

(56) Entgegenhaltungen:
- EP-A1- 1 918 180
- EP-A2- 0 689 978
- CA-A1- 2 457 216

## Beschreibung

Die Erfindung betrifft ein Retarderbremssystem eines aus einem landwirtschaftlichen Traktor sowie einem elektrisch angetriebenen Anhänger bestehenden Fahrzeuggespanns.

EP 1 918 180 A1 offenbart eine Fahrzeuganordnung, bestehend aus einem Zugfahrzeug und mindestens einem mit dem Zugfahrzeug verbundenen Anhänger, der einen Zusatzantrieb enthält. Zur Verbesserung der Geländegängigkeit der Fahrzeuganordnung wird als Zusatzantrieb für den Anhänger ein Elektromotor verwendet.

Herkömmliche Retarderbremssysteme beruhen auf der Durchführung einer Motorbremsung, die es ermöglicht, ein mittels eines Verbrennungsmotors angetriebenes Fahrzeug ohne Betätigung zugehöriger Radbremseinrichtungen zu verzögern. Bei Fahrzeuggespannen kann dies zu Problemen führen, da ein an dem Fahrzeug angebrachter Anhänger in einem solchen Falle ungebremst bleibt und von hinten schiebend auf das Fahrzeug einwirkt. Beim Befahren eines Gefälles kann dies in Verbindung mit einer entsprechend hohen Masse des Anhängers zu einem unerwünschten Einknicken des Fahrzeuggespanns ("Jackknifing") führen. Entsprechende Betrachtungen gelten für die im Lkw-Bereich übliche Verwendung separater Retardereinrichtungen.

Andererseits gewinnen elektrisch angetriebene Anbau- und Zusatzgeräte gerade im landwirtschaftlichen Bereich zunehmend an Bedeutung. Hierzu gehören auch elektrisch angetriebene Anhänger, also solche mit elektrischer Triebachse, die sich vor allem bei der Durchführung von Transportarbeiten durch verbesserte Traktion und Energieeffizienz auszeichnen. Eine solche elektrische Triebachse für einen landwirtschaftlichen Anhänger wird beispielsweise von der Firma Fliegl unter der Bezeichnung "Power DriveElect" angeboten.

Es ist daher Aufgabe der vorliegenden Erfindung, ein an die Verwendung mit einem elektrisch angetriebenen Anhänger angepasstes Retarderbremssystem der eingangs genannten Art anzugeben.

Diese Aufgabe wird durch ein Retarderbremssystem mit den Merkmalen des Patentanspruchs 1 gelöst.

Das Retarderbremssystem eines aus einem landwirtschaftlichen Traktor sowie einem elektrisch angetriebenen Anhänger bestehenden Fahrzeuggespanns umfasst einen Antriebsstrang mit einem Verbrennungsmotor, einem dem Verbrennungsmotor nachgeschalteten Fahrzeuggetriebe, einer mit einem ersten Getriebeabgang des Fahrzeuggetriebes verbundenen mechanischen Antriebsachse des landwirtschaftlichen Traktors, einer mit einem zweiten Getriebeabgang verbundenen ersten elektrischen Motorgeneratoreinheit, und einer dem Anhänger zugeordneten elektrischen Triebachse, die mittels einer zweiten elektrischen Motorgeneratoreinheit antreibbar ist, wobei die beiden elektrischen Motorgeneratoreinheiten über einen Gleichstromzwischenkreis elektrisch miteinander in Verbindung stehen. In einem Retarderbetrieb wird die zweite elektrische Motorgeneratoreinheit generatorisch und die erste elektrische Motorgeneratoreinheit motorisch betrieben, sodass zumindest ein Teil einer an der elektrischen Triebachse abgerufenen Bruttoretarderleistung als Verlustleistung innerhalb des Antriebsstrangs dissipativ vernichtet wird.

Die Erfindung macht sich den Umstand zunutze, dass jede der Komponenten des Antriebsstrangs mit einer bestimmten Verlustleistung behaftet ist, wobei die Verlustleistungen mit zunehmender Bruttoretarderleistung steigen. Zu den verlustbehafteten Komponenten gehören nicht nur der Verbrennungsmotor, das Fahrzeuggetriebe sowie die beiden elektrischen Motorgeneratoreinheiten, sondern auch zwischen den beiden elektrischen Motorgeneratoreinheiten und dem Gleichstromzwischenkreis angeordnete Zweiwegeinverter, sowie weitere mechanische Antriebskomponenten wie Differentialgetriebe, Radendantriebe, Achslager und Traktor- bzw. Anhängerreifen. So tragen letztere aufgrund der beim Befahren einer Bodenoberfläche zu verrichtenden Walkarbeit ebenfalls in gewissem Umfang zu den Verlusten innerhalb des Antriebsstrangs bei.

Der Umfang der mittels des Retarderbremssystems erzielten Bremswirkung kann seitens eines Fahrzeugbedieners über eine Bedieneinheit vorgegeben werden. Eine Steuereinheit rechnet die Bedienervorgabe in eine entsprechende Retarderanforderung um. Die aufgrund der Retarderanforderung an der elektrischen Triebachse des Anhängers abgerufene Bruttoretarderleistung lässt sich hierbei durch entsprechende Ansteuerung der Zweiwegeinverter auf Grundlage der Durchführung eines Voll- bzw. Teilgeneratorbetriebs der zweiten elektrischen Motorgeneratoreinheit innerhalb eines durch deren Nennleistung definierten Leistungsbereichs variieren, wozu die beiden Zweiwegeinverter als Shuntregler arbeiten. Die überschüssige, d.h. nicht dissipativ vernichtete Bruttoretarderleistung kommt der mechanischen Antriebsachse des landwirtschaftlichen Traktors zugute und steht dort als entsprechende Vortriebsleistung zur Verfügung. Letztere sorgt dafür, dass Anhänger und landwirtschaftlicher Traktor im Bereich einer zugehörigen Anhängerkupplung stets unter einer gewissen Zugspannung stehen, mithin ein unerwünschtes Einknicken des Fahrzeuggespanns verlässlich vermieden wird.

Da das erfindungsgemäße Retarderbremssystem die ohnehin vorhandenen Komponenten des Antriebsstrangs des Fahrzeuggespanns einschließlich der von diesen umfassten Kühlung zur Abfuhr der im Retarderbetrieb verlustleistungsbedingt entstehenden Wärme nutzt, erübrigt sich der Einsatz separater Retardereinrichtungen, wie sie im Lkw-Bereich üblich sind.

Vorteilhafte Ausführungen des erfindungsgemäßen Retarderbremssystems gehen aus den Unteransprüchen hervor.

Vorzugsweise wird der Verbrennungsmotor zur Erhöhung der Bremswirkung zusätzlich in einen Motorbremsbetrieb versetzt. Zu diesem Zweck wird die Kraftstoffversorgung des Verbrennungsmotors unterbrochen oder aber zumindest weitgehend gedrosselt, sodass sich seitens des Verbrennungsmotors ein erhöhtes Motorschlepp- bzw. Kompressionsmoment aufbauen lässt. Da die Wirkung der Motorbremse mit steigender Drehzahl des Verbrennungsmotors zunimmt, ist es denkbar, dass zugleich der Gang des Fahrzeuggetriebes nach Maßgabe der abgerufenen Bruttoretarderleistung automatisiert heruntergeschaltet wird. Letzteres kann auch im Hinblick auf die Aufrechterhaltung einer bestimmten Fahrgeschwindigkeit des Fahrzeuggespanns erfolgen. Auf diese Weise lässt sich die Bremswirkung über die Verlustleistung des Antriebsstrangs, mithin dessen Nettoretarderleistung bis hin zur theoretisch möglichen Bruttoretarderleistung der zweiten elektrischen Motorgeneratoreinheit hinaus erhöhen. Bei dem Fahrzeuggetriebe handelt es sich insbesondere um ein stufenloses Getriebe, beispielsweise ein sogenanntes IVT-Getriebe (Infinitely Variable Transmission).

Insbesondere wird der Motorbremsbetrieb erst dann ausgelöst, wenn erkannt wird, dass bei der Durchführung des Retarderbetriebs die Verlustleistung des Antriebsstrangs und damit die Nettoretarderleistung ausgeschöpft ist.

Genauer gesagt unterbleibt eine Motobremsung, solange sich die aus der Bedienervorgabe abgeleitete Retarderanforderung im Rahmen der (möglichen) Nettoretarderleistung hält. Sofern diese darüber hinaus geht, veranlasst die Steuereinheit eine Erhöhung der Bremswirkung durch Hinzuschalten der Motorbremse. Auf diese Weise ist sichergestellt, dass an der Anhängerkupplung stets eine gewisse Zugspannung zwischen Anhänger und landwirtschaftlichem Traktor gewahrt bleibt.

Um den Anteil der dissipativ vernichteten Bruttoretarderleistung zu erhöhen, ist es denkbar, dass mittels des Verbrennungsmotors betriebene Zusatzaggregate zumindest einen Teil der Bruttoretarderleistung aufbrauchen. Bei den Zusatzaggregaten kann es sich um Hydraulikpumpen, Luftkompressoren, Kühllüfter und dergleichen handeln, wobei diese zur Erhöhung der Verlustleistung und damit der Nettoretarderleistung gezielt zugeschaltet werden. Darüber hinaus ist eine Zuschaltung elektrischer Verbraucher, wie einer elektrischen Antriebsachse des landwirtschaftlichen Traktors möglich.

Des Weiteren kann es sich bei dem zweiten Getriebeabgang um einen frontseitigen Zapfwellenanschluss handeln, an dem die erste elektrische Motorgeneratoreinheit abnehmbar angebracht ist. Die erste elektrische Motorgeneratoreinheit kann dabei Bestandteil eines sogenannten Zapfwellengenerators sein. Der Zapfwellengenerator stellt eine separate bauliche Einheit dar, die aus einer tragenden Struktur besteht, die ein mit dem Zapfwellenanschluss des landwirtschaftlichen Traktors verbindbares Zwischengetriebe sowie einen dem Zwischengetriebe nachgeschalteten elektrischen Motorgenerator aufweist. Ein derartiger Zapfwellengenerator dient insbesondere der Energieversorgung von an dem landwirtschaftlichen Traktor anbringbaren elektrisch angetriebenen Anbau- und Zusatzgeräten. Es sei an dieser Stelle angemerkt, dass die erste elektrische Motorgeneratoreinheit abweichend davon auch baulicher Bestandteil des landwirtschaftlichen Traktors sein kann. Aus Platzgründen wird jedoch gerade im Falle eines erhöhten Leistungsbedarfs im Bereich oberhalb von 25 kW eine von den baulichen Gegebenheiten des landwirtschaftlichen Traktors unabhängige Anbaulösung bevorzugt.

Das erfindungsgemäße Retarderbremssystem wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine beispielhafte Ausführungsform des erfindungsgemäßen Retarderbremssystems eines aus einem landwirtschaftlichen Traktor sowie einem elektrisch angetriebenen Anhänger bestehenden Fahrzeuggespanns,
- Fig. 2: ein beispielhaftes Energieflussdiagramm zur Veranschaulichung einer mittels des Retarderbremssystems gemäß Fig. 1 erzielbaren Brutto- bzw. Nettoretarderleistung,
- Fig. 3: ein Diagramm zur Veranschaulichung der zur Verfügung stehenden Nettoretarderleistung in Abhängigkeit der Bruttoretarderleistung, und
- Fig. 4: ein Diagramm zur Veranschaulichung der zur Verfügung stehenden Nettoretarderleistung in Abhängigkeit einer Fahrgeschwindigkeit des Fahrzeuggespanns.

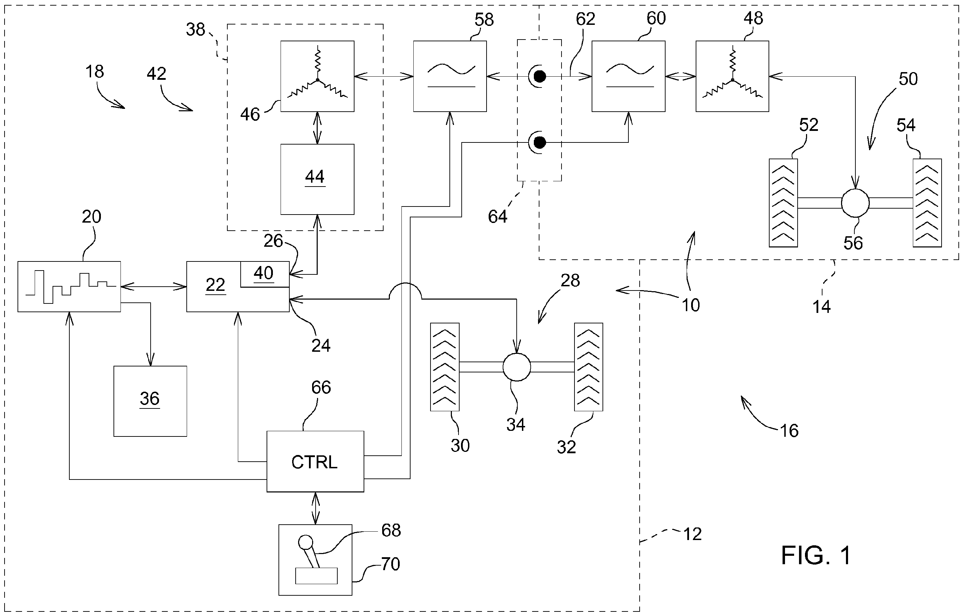

Fig. 1 zeigt eine beispielhafte Ausführungsform des erfindungsgemäßen Retarderbremssystems.

Das Retarderbremssystem 10 ist im vorliegenden Fall Bestandteil eines aus einem landwirtschaftlichen Traktor 12 sowie einem elektrisch angetriebenen Anhänger 14 bestehenden Fahrzeuggespanns 16. Das Fahrzeuggespann 16 ist in Fig. 1 lediglich schematisch wiedergegeben, wobei der landwirtschaftliche Traktor 12 mit dem Anhänger 14 über eine nicht dargestellte Anhängekupplung verbunden ist. Bei dem Anhänger 14 handelt es sich beispielsweise um einen Transportanhänger mit einer beladbaren Kippmulde oder einem Flüssigkeitstank.

Das Retarderbremssystem 10 umfasst einen Antriebsstrang 18 mit einem dem landwirtschaftlichen Traktor 12 zugeordneten, als Dieselmotor ausgebildeten Verbrennungsmotor 20. Ein dem Verbrennungsmotor 20 nachgeschaltetes Fahrzeuggetriebe 22 in Gestalt eines sogenannten IVT-Getriebes (Infinitely Variable Transmission) weist einen ersten Getriebeabgang 24 und einen zweiten Getriebeabgang 26 auf.

Eine mit dem ersten Getriebeabgang 24 verbundene mechanische Antriebsachse 28 in Gestalt einer angetriebenen Hinterachse umfasst linke und rechte Hinterräder 30, 32 , die über ein zwischengeschaltetes Differentialgetriebe 34 seitens des Verbrennungsmotors 20 mit einem von einem Fahrzeugbediener vorgebbaren Antriebmoment beaufschlagbar sind.

Zugleich sind mehrere mittels des Verbrennungsmotors 20 betriebene Zusatzaggregate 36 vorgesehen. Bei den Zusatzaggregaten 36 handelt es sich um eine Hydraulikpumpe, Luftkompressoren, Kühllüfter und dergleichen.

Des Weiteren ist eine mit dem zweiten Getriebeabgang 26 des Fahrzeuggetriebes 22 verbundene erste elektrische Motorgeneratoreinheit 38 vorhanden. Beispielsgemäß handelt es sich bei dem zweiten Getriebeabgang 26 um einen an dem landwirtschaftlichen Traktor 12 frontseitig vorgesehenen Zapfwellenanschluss, der über ein dem Fahrzeuggetriebe 22 nachgeschaltetes Zapfwellengetriebe 40 antreibbar ist und an dem die erste elektrische Motorgeneratoreinheit 38 abnehmbar angebracht ist. Die erste elektrische Motorgeneratoreinheit 38 ist dabei Bestandteil eines Zapfwellengenerators 42. Der Zapfwellengenerator 42 stellt eine separate bauliche Einheit dar, die aus einer tragenden Struktur besteht, die ein mit dem Zapfwellenanschluss des landwirtschaftlichen Traktors 12 verbindbares Zwischengetriebe 44 sowie einen dem Zwischengetriebe 44 nachgeschalteten elektrischen Motorgenerator 46 aufweist.

Eine zweite elektrische Motorgeneratoreinheit 48 dient dem Antrieb einer dem Anhänger 14 zugeordneten elektrischen Triebachse 50, die linke und rechte Antriebsräder 52, 54 umfasst, die über ein Differentialgetriebe 56 mittels der zweiten elektrischen Motorgeneratoreinheit 48 antreibbar sind. Die Steuerung der zweiten elektrischen Motorgeneratoreinheit 48 einschließlich der Vorgabe eines entsprechenden Antriebsmoments zur Beaufschlagung der elektrischen Triebachse 50 erfolgt hierbei vom landwirtschaftlichen Traktor 12 aus.

Die beiden elektrischen Motorgeneratoreinheiten 38, 48 sind drehstrombetrieben und stehen über zugehörige erste und zweite Zweiwegeinverter 58, 60 sowie einen Gleichstromzwischenkreis 62 elektrisch miteinander in Verbindung. Je nach Betriebsmodus der Zweiwegeinverter 58, 60 (diese sind wahlweise in einem Stromerzeugungsmodus oder einem Gleichrichtermodus betreibbar) lässt sich jede der beiden elektrischen Motorgeneratoreinheiten 38, 48 entweder als Motor oder als Generator betreiben.

Der Gleichstromzwischenkreis 62 ist auf den landwirtschaftlichen Traktor 12 sowie den Anhänger 14 aufgeteilt, wobei die beiden Teile mittels eines Leistungsteckverbinders 64 miteinander verbunden sind.

Eine Steuereinheit 66 dient der Koordination der verschiedenen Komponenten des Antriebsstrangs 18, insbesondere von Funktionen der beiden Zweiwegeinverter 58, 60, des Fahrzeuggetriebes 22 (einschließlich der Umschaltung zwischen verschiedenen Gängen bzw. Getriebeübersetzungen), der Einspritzung des Verbrennungsmotors 20, des Zapfwellanschlusses, sowie der Zusatzaggregate 36.

Im Normalbetrieb dient der Zapfwellengenerator 42 der Versorgung der zweiten elektrischen Motorgeneratoreinheit 48 mit elektrischer Energie. Ausgehend von diesem Normalbetrieb kann der Fahrzeugbediener über eine als Handhebel 68 ausgebildete Bedieneinheit 70 einen Retarderbetrieb aufrufen, in dem die zweite elektrische Motorgeneratoreinheit 48 generatorisch und die erste elektrische Motorgeneratoreinheit 38 motorisch betrieben wird. Hierzu befindet sich der zweite Zweiwegeinverter 60 im Stromerzeugungsmodus und der erste Zweiwegeinverter 58 im Gleichrichtermodus.

Durch Verstellen des Handhebels 68 lässt sich der Umfang der mittels des Retarderbremssystems 10 erzielten Bremswirkung vom Fahrzeugbediener vorgeben. Die Steuereinheit 66 rechnet die insofern erfolgende Bedienervorgabe in eine entsprechende Retarderanforderung in Form einer an der elektrischen Triebachse 50 des Anhängers 14 abgerufenen Bruttoretarderleistung um. Diese lässt sich durch entsprechende Ansteuerung der beiden Zweiwegeinverter 58, 60 auf Grundlage der Durchführung eines Voll- bzw. Teilgeneratorbetriebs der zweiten elektrischen Motorgeneratoreinheit 48 innerhalb eines durch deren Nennleistung definierten Leistungsbereichs variieren, wozu die beiden Zweiwegeinverter 58, 60 als Shuntregler arbeiten.

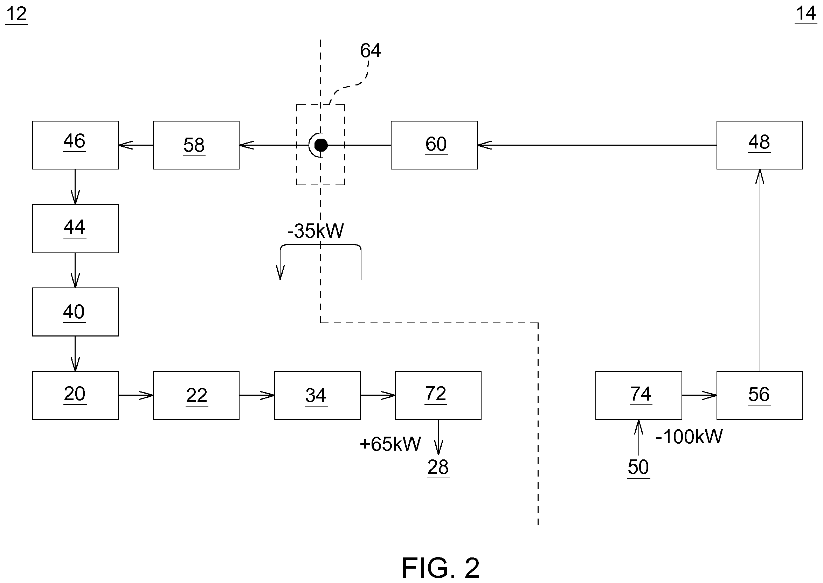

Jede der Komponenten des Antriebsstrangs 18 ist mit einer bestimmten Verlustleistung behaftet, sodass zumindest ein Teil der Bruttoretarderleistung als Verlustleistung innerhalb des Antriebsstrangs 18 dissipativ vernichtet wird. Diese Situation ist in Fig. 2 veranschaulicht, in der ein beispielhaftes Energieflussdiagramm wiedergegeben ist. Bei den gezeigten Komponenten handelt es sich neben Verbrennungsmotor 20, Fahrzeuggetriebe 22, Differentialgetriebe 34, 56, Zweiwegeinvertern 58, 60, Zapfwellengetriebe 40, elektrische Motorgeneratoreinheiten 38, 48 und Zwischengetriebe 44 um weitere mechanische Antriebskomponenten 72, 74 auf Seiten des landwirtschaftlichen Traktors 12 bzw. Anhängers 14 wie Radendantriebe, Achslager und Traktor- bzw. Anhängerreifen.

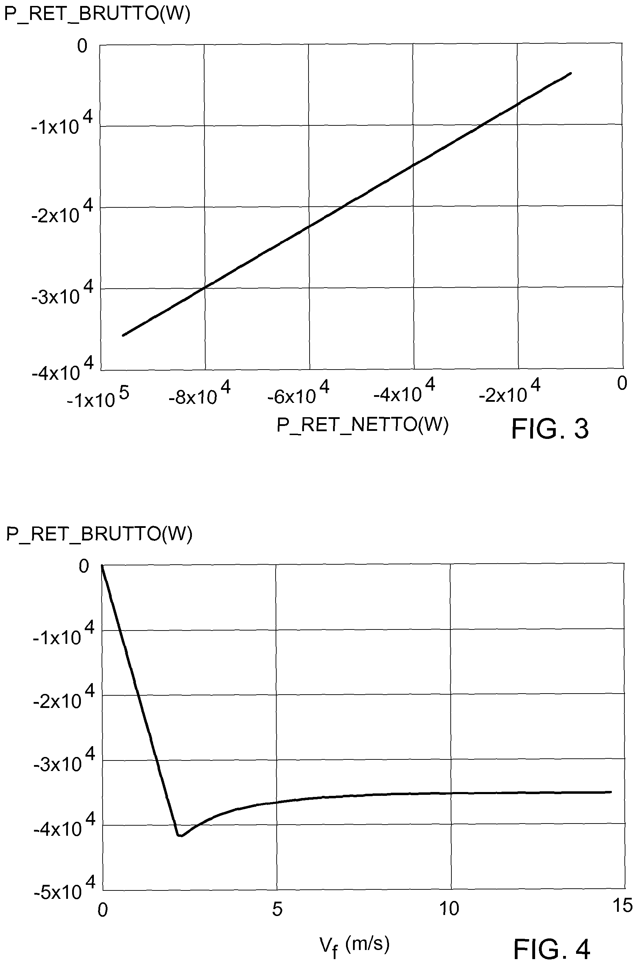

Beispielsgemäß beträgt die an der elektrischen Triebachse 50 aufgrund der Retarderanforderung des Fahrzeugbedieners abgerufene Bruttoretarderleistung -100 kW. Die Verlustleistung des Antriebsstrangs 18 beläuft sich in diesem Fall auf -35 kW, vorausgesetzt, dass sich der Verbrennungsmotor 20 antriebsneutral verhält und selbst keinen Beitrag zur Verlustleistung des Antriebsstrangs 18 liefert (Motorbremsbetrieb abgeschaltet). Die Verlustleistung bildet dann die Nettoretarderleistung des Antriebsstrangs 18. Im Allgemeinen nimmt die Nettoretarderleistung mit der abgerufenen Bruttoretarderleistung zu. Dieser Sachverhalt ist in dem Diagramm gemäß Fig. 3 wiedergegeben, in dem die zur Verfügung stehende Nettoretarderleistung (P_RET_NETTO) in Abhängigkeit der Bruttoretarderleistung (P_RET_BRUTTO) veranschaulicht ist. Letztere ist ferner von der Fahrgeschwindigkeit (v_{f}) des Fahrzeuggespanns 16 abhängig und weist gemäß dem in Fig. 4 dargestellten Diagramm oberhalb einer Fahrgeschwindigkeit von etwa 5 m/s (entsprechend 18 km/h) einen im Wesentlichen konstanten Verlauf auf.

Die überschüssige, d.h. nicht dissipativ vernichtete Bruttoretarderleistung kommt der mechanischen Antriebsachse 28 des landwirtschaftlichen Traktors 12 zugute und steht dort als entsprechende Vortriebsleistung zur Verfügung. Letztere beträgt im vorliegenden Beispiel +65 kW und sorgt dafür, dass Anhänger 14 und landwirtschaftlicher Traktor 12 im Bereich der Anhängekupplung stets unter einer gewissen Zugspannung stehen, mithin ein unerwünschtes Einknicken des Fahrzeuggespanns 16 verlässlich vermieden wird.

Zusammenfassend beruht die Bremswirkung des Retarderbremssystems 10 somit auf einer Reversierung des Energieflusses im Antriebsstrang 18.

Zur Erhöhung der Bremswirkung kann der Verbrennungsmotor 20 zusätzlich in einen Motorbremsbetrieb versetzt werden. Zu diesem Zweck unterbricht die Steuereinheit 66 die Kraftstoffversorgung des Verbrennungsmotors 20 oder drosselt diese zumindest weitgehend, sodass sich seitens des Verbrennungsmotors 20 ein erhöhtes Motorschlepp- bzw. Kompressionsmoment aufbauen lässt.

Die Steuereinheit 66 löst den Motorbremsbetrieb erst dann aus, wenn diese erkennt, dass bei der Durchführung des Retarderbetriebs die Verlustleistung des Antriebsstrangs 18 und damit die Nettoretarderleistung ausgeschöpft ist. Genauer gesagt unterbleibt eine Motorbremsung, solange sich die aus der Bedienervorgabe abgeleitete Retarderanforderung im Rahmen der (möglichen) Nettoretarderleistung hält. Sofern diese darüber hinaus geht, veranlasst die Steuereinheit 66 eine Erhöhung der Bremswirkung durch Hinzuschalten der Motobremse. Da die Wirkung der Motorbremse mit steigende Drehzahl des Verbrennungsmotors 20 zunimmt, ist es denkbar, dass zugleich der Gang des Fahrzeuggetriebes 22 nach Maßgabe der abgerufenen Bruttoretarderleistung heruntergeschaltet wird. Letzteres kann auch im Hinblick auf die Aufrechterhaltung einer bestimmten Fahrgeschwindigkeit des Fahrzeuggespanns 16 erfolgen.

Um den Anteil der dissipativ vernichteten Bruttoretarderleistung weiter zu erhöhen, schaltet die Steuereinheit 66 optional die mittels des Verbrennungsmotors 20 betriebenen Zusatzaggregate 36 hinzu.

## Patentansprüche

1. Retarderbremssystem (10) eines aus einem landwirtschaftlichen Traktor (12) sowie einem elektrisch angetriebenen Anhänger (14) bestehenden Fahrzeuggespanns (16), umfassend einen Antriebsstrang (18) mit Komponenten, von denen jede mit einer bestimmten Verlustleistung behaftet ist, umfassend einen Verbrennungsmotor (20), ein dem Verbrennungsmotor (20) nachgeschaltetes Fahrzeuggetriebe (22), eine mit einem ersten Getriebeabgang (24) des Fahrzeuggetriebes (22) verbundene mechanische Antriebsachse (28) des landwirtschaftlichen Traktors (12), eine mit einem zweiten Getriebeabgang (26) verbundene erste elektrische Motorgeneratoreinheit (38), und eine dem Anhänger (14) zugeordnete elektrische Triebachse (50), die mittels einer zweiten elektrischen Motorgeneratoreinheit (48) betreibbar ist, wobei die beiden elektrischen Motorgeneratoreinheiten (38, 48) über einen Gleichstromzwischenkreis (62) elektrisch miteinander in Verbindung stehen, wobei in einem Retarderbetrieb die zweite elektrische Motorgeneratoreinheit (48) generatorisch und die erste elektrische Motorgeneratoreinheit (38) motorisch betrieben wird, sodass zumindest ein Teil einer an der elektrischen Triebachse (50) von der zweiten elektrischen Motorgeneratoreinheit (48) abgerufenen Bruttoretarderleistung von den verlustbehafteten Komponenten als Nettoretarderleistung innerhalb des Antriebsstrangs (18) dissipativ vernichtet wird, wobei die überschüssige Bruttoretarderleistung der mechanischen Antriebsachse (28) des landwirtschaftlichen Traktors (12) zugutekommt und dort als entsprechende Vortriebsleistung zur Verfügung steht.

2. Retarderbremssystem nach Anspruch 1, **dadurch gekennzeichnet, dass** der Verbrennungsmotor (20) zusätzlich in einen Motorbremsbetrieb versetzt wird.

3. Retarderbremssystem nach Anspruch 2, **dadurch gekennzeichnet, dass** der Motorbremsbetrieb erst dann ausgelöst wird, wenn erkannt wird, dass bei der Durchführung des Retarderbetriebs die Verlustleistung des Antriebsstrangs (18) ausgeschöpft ist.

4. Retarderbremssystem nach wenigstens einem der Ansprüche 1 bis 3, **dadurch gekennzeichnet, dass** mittels des Verbrennungsmotors (20) betriebene Zusatzaggregate (36) zumindest einen Teil der Bruttoretarderleistung aufbrauchen.

5. Retarderbremssystem nach wenigstens einem der Ansprüche 1 bis 4, **dadurch gekennzeichnet, dass** es sich bei dem zweiten Getriebeabgang (26) um einen frontseitigen Zapfwellenanschluss handelt, an dem die erste elektrische Motorgeneratoreinheit (38) abnehmbar angebracht ist.

## Claims

1. Retarder brake system (10) of a vehicle combination (16) composed of an agricultural tractor (12) and an electrically driven trailer (14), comprising a drive train (18) with components, each of which is subject to a specific power loss, comprising an internal combustion engine (20), a vehicle transmission (22) which is connected downstream of the internal combustion engine (20), a mechanical drive axle (28), connected to a first transmission output (24) of the vehicle transmission (22), of the agricultural tractor (12), a first electric motor/generator unit (38) which is connected to a second transmission output (26), and an electric drive axle (50) which is assigned to the trailer (14) and can be operated by means of a second electric motor/generator unit (48), wherein the two electric motor/generator units (38, 48) are electrically connected to one another via a DC intermediate circuit (62), wherein in a retarder mode the second electric motor/generator unit (48) is operated as a generator and the first electric motor/generator unit (38) is operated as a motor, with the result that at least a portion of a gross retarder power which is extracted from the second electric motor/generator unit (48) at the electric drive axle (50) is dissipatively destroyed by the components which are subject to loss as net retarder power within the drive train (18), wherein the excess gross retarder benefits the mechanical drive axle (28) power of the agricultural tractor (12) and is available there as corresponding propulsion power.

2. Retarder brake system according to Claim 1, **characterized in that** the internal combustion engine (20) is additionally placed in an engine brake mode.

3. Retarder brake system according to Claim 2, **characterized in that** the engine brake mode is not triggered until it is detected that the power loss of the drive train (18) during the execution of the retarder mode is exhausted.

4. Retarder brake system according to at least one of Claims 1 to 3, **characterized in that** accessories (36) which are operated by means of the internal combustion engine (20) consume at least part of the gross retarder power.

5. Retarder brake system according to at least one of Claims 1 to 4, **characterized in that** the second transmission output (26) is a front-side power take-off shaft connection to which the first electric motor/generator unit (38) is attached in a removable fashion.

## Revendications

1. Système de frein ralentisseur (10) d'un attelage (16) composé d'un tracteur agricole (12) ainsi que d'une remorque (14) à propulsion électrique, comprenant une chaîne cinématique (18) ayant des composants dont chacun présente des pertes de puissance données, comprenant un moteur à combustion interne (20), une boîte de vitesses de véhicule (22) montée en aval du moteur à combustion interne (20), un essieu d'entraînement mécanique (28) du tracteur agricole (12) relié à une première sortie de boîte de vitesses (24) de la boîte de vitesses de véhicule (22), une première unité moteur-générateur électrique (38) reliée à une deuxième sortie de boîte de vitesses (26) et un essieu moteur électrique (50) associé à la remorque (14), lequel peut fonctionner au moyen d'une deuxième unité moteur-générateur électrique (48), les deux unités moteur-générateur électriques (38, 48) étant reliées électriquement l'un à l'autre par le biais d'un circuit intermédiaire à courant continu (62), dans un fonctionnement en mode ralentisseur, la deuxième unité moteur-générateur électrique (48) fonctionnant comme un générateur et la première unité moteur-générateur électrique (38) fonctionnant comme un moteur, de sorte qu'au moins une partie d'une puissance de ralentisseur brute appelée au niveau de l'essieu moteur électrique (50) par la deuxième unité moteur-générateur électrique (48) est annulée par dissipation par les composants présentant des pertes en tant que puissance de ralentisseur nette au sein de la chaîne cinématique (18), la puissance de ralentisseur brute en surplus étant affectée à l'essieu d'entraînement mécanique (28) du tracteur agricole (12) et étant disponible au niveau de celui-ci en tant que puissance d'avance correspondante.

2. Système de frein ralentisseur selon la revendication 1, **caractérisé en ce que** le moteur à combustion interne (20) est en outre amené dans un mode de fonctionnement en frein moteur.

3. Système de frein ralentisseur selon la revendication 2, **caractérisé en ce que** le mode de fonctionnement en frein moteur n'est déclenché que lorsqu'il est détecté, lors de la mise en oeuvre du fonctionnement en mode ralentisseur, que les pertes de puissance de la chaîne cinématique (18) sont épuisées.

4. Système de frein ralentisseur selon au moins l'une des revendications 1 à 3, **caractérisé en ce que** les groupes supplémentaires (36) qui fonctionnent au moyen du moteur à combustion interne (20) consomment au moins une partie de la puissance de ralentisseur brute.

5. Système de frein ralentisseur selon au moins l'une des revendications 1 à 4, **caractérisé en ce que** la deuxième sortie de boîte de vitesses (26) est un raccord de prise de force du côté avant au niveau duquel la première unité moteur-générateur électrique (38) est montée de manière amovible.
